# EUROPÄISCHE PATENTSCHRIFT

(11) **EP 2 210 223 B1**
(45) Veröffentlichungstag und Bekanntmachung des Hinweises auf die Patenterteilung: **13.03.2013**
(21) Anmeldenummer: 08850936.9
(22) Anmeldetag: 07.11.2008
(51) Int. Cl.: G06K 19/077

(54) **DOKUMENT MIT EINER INTEGRIERTEN ANZEIGEVORRICHTUNG**
DOCUMENT COMPRISING A BUILT-IN DISPLAY DEVICE
DOCUMENT À DISPOSITIF D'AFFICHAGE INTÉGRÉ

(30) Priorität: 12.11.2007 DE 102007000885
(43) Veröffentlichungstag der Anmeldung: 28.07.2010
(73) Patentinhaber: Bundesdruckerei GmbH, 10958 Berlin (DE)
(72) Erfinder: DIETRICH, Frank, 12437 Berlin (DE); FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE); DRESSEL, Olaf, 14641 Wustermark (DE)
(74) Vertreter: Richardt Patentanwälte GbR
(86) Internationale Anmeldenummer: PCT/EP2008/065147
(87) Internationale Veröffentlichungsnummer: WO 2009/062892

(56) Entgegenhaltungen:
- WO-A-2005/109887

## Beschreibung

Die Erfindung bezieht sich auf ein Dokument, insbesondere ein Wert- oder Sicherheitsdokument, mit einer integrierten Anzeigevorrichtung, ein Lesegerät, ein Verfahren zur Verifikation eines Dokuments sowie ein Computerprogrammprodukt.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysterne für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117, WO2005/109887 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Der Erfindung liegt dem gegenüber die Aufgabe zu Grunde, ein verbessertes Dokument, ein Lesegerät für ein Dokument, ein Verfahren zur Verifikation eines Dokuments sowie ein Computerprogrammprodukt zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen eines erfindungsgemäßen Dokuments beinhalten eine integrierte Anzeigevorrichtung sowie einen elektronischen Speicher zur Speicherung erster und zweiter Daten. Durch Steuerungsmittel des Dokuments wird die Anzeigevorrichtung zur Wiedergabe der ersten und zweiten Daten angesteuert.

Die Wiedergabe der ersten Daten und der zweiten Daten kann nacheinander erfolgen. Alternativ kann die Wiedergabe der zweiten Daten auch in die Wiedergabe der ersten Daten eingeblendet werden.

Die Wiedergabe der zweiten Daten erfolgt für eine Zeitdauer, die unterhalb der Wahrnehmungsschwelle für eine visuelle Wahrnehmung liegt. Diese Wahrnehmungsschwelle liegt im Allgemeinen bei ca. 0,04 s. Wenn die Wiedergabe der zweiten Daten auf der Anzeigevorrichtung, also für höchstens ca. diese maximale Zeitdauer erfolgt, so ist die Wiedergabe visuell nicht wahrnehmbar, das heißt, ein Benutzer des Dokuments kann die auf der Anzeigevorrichtung wiedergegebenen zweiten Daten mit dem bloßen Auge nicht wahrnehmen. Zwischen zwei aufeinander folgenden Wiederholungen der Widergabe der zweiten Daten liegt ein Zeitraum, der ein Vielfaches der Wahrnehmungsschwelle beträgt, beispielsweise mindestens 0,1 s.

Nach einer Ausführungsform erfolgt die Wiedergabe der zweiten Daten nur wenn sich das Dokument in einem Lesegerät befindet. Auf diese Weise kann eine mögliche ungewollte Beeinflussung der das Dokument betrachtenden Personen vermieden werden.

Nach einer Ausführungsform der Erfindung erfolgt die Wiedergabe der zweiten Daten für eine Bildwiederholperiode der Anzeigevorrichtung. Die Bild-Wiederholperiode ergibt sich aus der Bildwechselfrequenz der Anzeigevorrichtung, das heißt die Anzahl der Vollbilder, die pro Sekunde auf der Anzeigevorrichtung wiedergegeben werden.

Nach einer Ausführungsform der Erfindung handelt es sich bei der Bildwiederholperiode um den Refresh-Zyklus der Anzeigevorrichtung.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Nach einer Ausführungsform der Erfindung hat das Dokument Mittel zur Abgabe eines Trigger-Signals. Das Trigger-Signal wird an ein Lesegerät gesendet, um die Erfassung der Wiedergabe der zweiten Daten durch das Lesegerät auszulösen. Insbesondere kann das Trigger-Signal zur Auslösung eines so genannten time-gated optischen Sensors des Lesegeräts ausgebildet sein. Durch die Abgabe dieses Trigger-Signals wird die Erfassung der nur kurzzeitig auf der Anzeigevorrichtung wiedergegebenen zweiten Daten durch das Lesegerät vereinfacht und reduziert den für die Erfassung erforderlichen Aufwand, da nicht ständig die Erfassung der Anzeigevorrichtung mit einer Hochgeschwindigkeitskamera erforderlich ist.

Nach einer Ausführungsform der Erfindung beinhalten die ersten Daten eine Bildsequenz, wobei die zweiten Daten beim Übergang von einem ersten Bild der Bildsequenz zu einem zweiten Bild der Bildsequenz wiedergegeben werden. Beispielsweise beinhaltet die Bildsequenz Gesichtsbilder eines Trägers des Dokuments aus verschiedenen Ansichten.

Die Wiedergabe einer Bildsequenz mit Bildern des Trägers des Wert- oder Sicherheitsdokuments aus unterschiedlichen Ansichten hat gegenüber einer statischen Anzeige eines einzigen zweidimensionalen Bildes den Vorteil, dass die Verifikation des Wert- oder Sicherheitsdokuments dadurch sicherer wird. Es hat sich nämlich herausgestellt, dass oftmals das üblicherweise in einem Ausweisdokument beinhaltete frontale Gesichtsbild für eine sichere Verifikation nicht ausreichend ist. Zur Erhöhung der Sicherheit bei der visuellen Verifikation, zum Beispiel durch einen Grenzbeamten oder Polizisten, werden erfindungsgemäß daher zumindest zwei Bilder des Trägers des Dokuments in einer Bildsequenz nacheinander auf der Anzeigevorrichtung wiedergegeben. Dadurch lassen sich insbesondere geringere False Rejection Rates (FRR) und False Acceptance Rates (FAR) erreichen. Um die Sicherheit weiter zu erhöhen, wird die Wiedergabe der zweiten Daten beim Übergang von einem Bild der Bildsequenz zu einem anderen Bild der Bildsequenz "eingestreut", d.h. für eine kurze Zeit wiedergegeben.

Nach einer Ausführungsform der Erfindung hat das Dokument ein Manipulandum zur Betätigung durch den Träger des Dokuments. Bei dem Manipulandum kann es sich um ein Bedienelement handeln, wie z. B. ein Einknopf-Bedienelement. Nach einer Ausführungsform der Erfindung dient das Manipulandum zur Navigation entlang einer in den Daten beinhalteten Bildsequenz. Durch Betätigung des Manipulandums kann der Benutzer also das gewünschte Bild für die Wiedergabe auf der Anzeigevorrichtung auswählen. Beispielsweise kann das Manipulandum hierzu eine "Vor-" und "Zurück" Navigationsfunktion zur Navigation entlang der Bildsequenz beinhalten.

Nach einer Ausführungsform der Erfindung wird nach Betätigung des Manipulandums nicht unmittelbar das Bild der Sequenz angezeigt, zu welchem der Benutzer navigieren möchte, sondern es werden zunächst für eine kurze Zeitdauer die zweiten Daten wiedergegeben. Um die Erfassung der Wiedergabe der zweiten Daten durch das Lesegerät zu vereinfachen ist nach Ausführungsformen der Erfindung das Dokument so ausgebildet, dass aufgrund der Betätigung des Manipulandums das Trigger-Signal für das Lesegerät erzeugt und abgesendet wird.

Nach einer Ausführungsform der Erfindung erfolgt die Wiedergabe der zweiten Daten periodisch wiederholend, wobei der Zeitabstand zwischen zwei aufeinander folgenden Wiederholungen der Wiedergabe der zweiten Daten ein Vielfaches der Wahrnehmungsschwelle beträgt. Beispielsweise werden die ersten Daten auf der Anzeigevorrichtung als Standbild wiedergegeben. In die Wiedergabe der ersten Daten, beispielsweise eines Gesichtsbildes, wird innerhalb von festen oder variierenden Zeitabständen, die zum Beispiel im Bereich von 0,1 s bis 10 s liegen können, die Wiedergabe der zweiten Daten "eingestreut".

Die ersten und zweiten Daten können jeweils verschiedene Daten beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes und dergleichen.

Nach einer Ausführungsform der Erfindung beinhalten die zweiten Daten eine Information, wie zum Beispiel eine Personalisierungsinformation, ein Sicherheitsmerkmal und/oder einen kryptographischen Schlüssel.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der zweiten Daten im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen, welches bei der Wiedergabe der zweiten Daten auf der Anzeigevorrichtung angezeigt wird.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform handelt es sich bei der Information um Zufallsdaten zur Erzeugung eines Schlüssels. Die Methoden der Erzeugung eines asymmetrischen oder symmetrischen Schlüssels sind dem Fachmann der Kryptographie bekannt.

Nach einer Ausführungsform der Erfindung hat das Dokument einen geschützten Speicherbereich, in dem dritte Daten gespeichert sind Ferner hat das Dokument eine Schnittstelle für einen lesenden Zugriff des Lesegeräts auf diese dritten Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind.

Bedingung für einen Lesezugriff des Lesegeräts auf die dritten Daten ist die zuvorige erfolgreiche Ausführung des kryptographischen Protokolls. Bei dem kryptographischen Protokoll kann es sich zum Beispiel um ein sogenanntes Challenge-Response Verfahren handeln. Durch das kryptographische Protokoll werden die dritten Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Nach einer Ausführungsform der Erfindung wird die Information in Form eines digitalen Wasserzeichens wiedergegeben. Dies kann so erfolgen, dass der Wiedergabe der ersten Daten während der kurzen Zeitdauer die Wiedergabe der zweiten Daten in Form eines digitalen Wasserzeichens überlagert wird. Diese Überlagerung kann im Bildraum oder im Frequenzraum erfolgen.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

Nach Ausführungsformen der Erfindung können die ersten und/oder die zweiten Daten auf ein Kraftfahrzeug bezogene Daten beinhalten. Beispielsweise beinhalten die ersten und/oder zweiten Daten ein amtliches Kraftfahrzeugkennzeichen, einen Fahrzeugparameter und/oder einen Gebührenstatus eines Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann hierdurch ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

In einem weiteren Aspekt betrifft die Erfindung ein Lesegerät für ein Dokument. Das Lesegerät hat einen Sensor zur Erfassung der Wiedergabe der zweiten Daten.

Nach einer Ausführungsform der Erfindung ist das Lesegerät zur Verifikation des Dokuments mit Hilfe der aus der Wiedergabe der zweiten Daten erfassten Information ausgebildet. Beispielsweise vergleicht das Lesegerät die erfasste Information mit einer Referenz-Information. Eine hinreichende Übereinstimmung zwischen der erfassten Information und der Referenzinformation ist dabei eine Vorraussetzung dafür, dass das Dokument als echt anerkannt wird.

Nach einer Ausführungsform der Erfindung hat das Lesegerät Mittel zur Ausführung des kryptographischen Protokolls mit Hilfe der von der Wiedergabe der zweiten Daten erfassten Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung hat das Lesegerät einen Empfänger für ein Trigger-Signal des Dokuments. Durch den Empfang des Trigger-Signals wird bei dem Lesegerät die optische Erfassung der Wiedergabe der zweiten Daten von der Anzeigevorrichtung ausgelöst, wie zum Beispiel mit Hilfe eines sogenannten time-gated Sensors, insbesondere eines time-gated CCD-Sensors. Die Schnittstelle, mit der das Dokument zur Ausführung des kryptographischen Protokolls und zum Lesezugriff auf die dritten Daten mit dem Dokument kommuniziert, kann dabei auch zur Übertragung des Trigger-Signals dienen. Alternativ hat das Lesegerät einen separaten Empfänger für das Trigger-Signal.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen In einem weiteren Aspekt betrifft die Erfindung ein Verfahren zur Verifikation eines Dokuments. Zur Verifikation des Dokuments wird aus der Wiedergabe der zweiten Daten eine Information erfasst. Die Information wird zur Prüfung der Echtheit des Dokuments mit einer Referenzinformation verglichen.

In einem weiteren Aspekt betrifft die Erfindung ein Computerprogrammprodukt zur Ausführung eines erfindungsgemäßen Verfahrens.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments,
- Figur 2: ein Flussdiagramm einer Ausführungsform eines erfindungsgemäßen Verfahrens,
- Figur 3: eine Draufsicht auf eine Ausführungsform eines erfindungsgemäßen Dokuments,
- Figur 4: den zeitlichen Verlauf der Wiedergabe auf einer Ausführungsform eines erfindungsgemäßen Dokuments,
- Figur 5: ein Blockdiagramm einer weiteren Ausführungsform eines erfindungsgemäßen Dokuments,
- Figur 6: ein Blockdiagramm einer weiteren Ausführungsform eines erfindungsgemäßen Dokuments.

Elemente der nachfolgenden Ausführungsformen, die einander entsprechen, sind mit denselben Bezugszeichen gekennzeichnet.

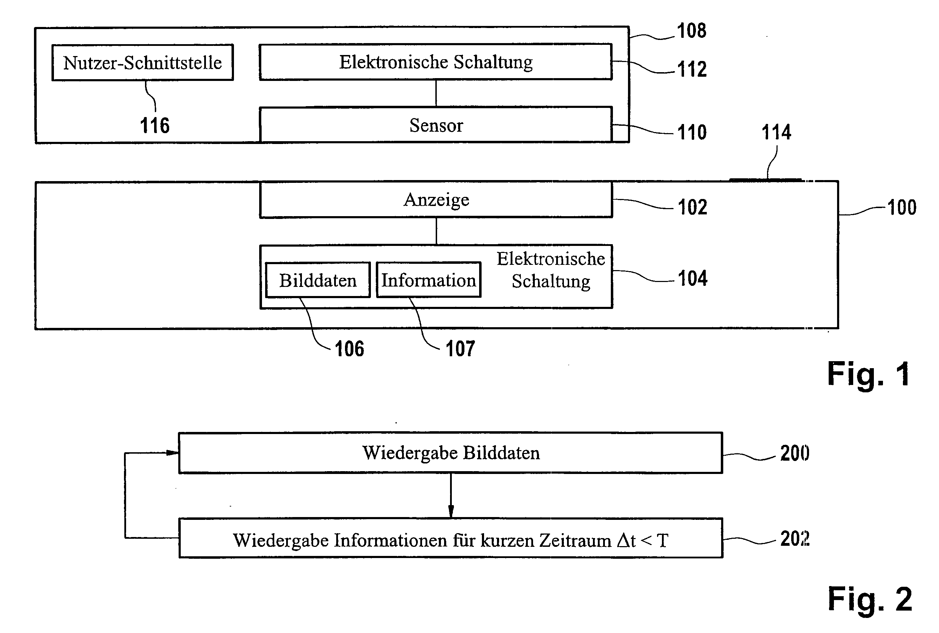

Die Figur 1 zeigt ein Dokument 100 mit einer in den Dokumentenkörper des Dokuments 100 integrierten Anzeige 102 und eine elektronischen Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder um eine Aktiv-Matrixanzeige handeln.

Die elektronische Schaltung 104 beinhaltet ein oder mehrere elektronische Speicher zur Speicherung von ersten Daten 106 und zweiten Daten 107. Die elektronische Schaltung 104 kann auf die Daten 106 und 107 zugreifen, um die Anzeige 102 zur Wiedergabe der Daten 106 und/oder 107 anzusteuern.

Bei den Daten 106 kann es sich zum Beispiel um Bilddaten handeln. Unter "Bilddaten" werden hier Daten verstanden, die sich zur Wiedergabe auf der Anzeige 102 eignen, das heißt zum Beispiel eine digitale Fotografie, ein Symbol, textuelle Angaben, ein Kennzeichen, insbesondere ein Kraftfahrzeugkennzeichen, oder dergleichen.

Die Daten 107 sind ebenfalls zur Wiedergabe auf der Anzeige 102 vorgesehen. Die Daten 107 beinhalten ein oder mehrere Informationen, wie zum Beispiel Personalisierungsinformationen, ein Sicherheitsmerkmal, einen kryptographischen Schlüssel, einen Fahrzeugparameter und/oder einen Gebührenstatus. Insbesondere kann es sich hierbei um benutzerspezifische Daten, wie zum Beispiel Informationen über den Träger des Dokuments handeln, um kraftfahrzeugbezogene Daten und/oder Daten bezüglich der Gültigkeit des Dokuments, der ausstellenden Behörde oder dergleichen.

Die zweiten Daten können zur Wiedergabe in Klartext oder in codierter Form, zum Beispiel in Form eines Barcodes oder eines digitalen Wasserzeichens ausgebildet sein.

Die Anzeige 102 ist so ausgebildet, dass sie einen schnellen Bildwechsel ermöglicht. Beispielsweise ermöglicht die Anzeigevorrichtung eine Bildwechselfrequenz von mindestens 25 wiedergegebenen Bildern pro Sekunde.

Das Lesegerät 108 hat einen optischen Sensor 110, wie zum Beispiel einen CCD-Sensor oder einen optischen Scanner. Der Sensor 110 ist dazu ausgebildet, die von der Anzeige 102 erzeugte Wiedergabe der ersten und/oder der zweiten Daten zu erfassen.

Der Sensor 110 ist mit einer elektronischen Schaltung 112 des Lesegeräts 108 verbunden. In der elektronischen Schaltung 112 kann eine Referenz-Information gespeichert sein. Ferner hat das Lesegerät 108 eine Nutzerschnittstelle 116. Alternativ oder zusätzlich kann das Lesegerät 108 auch eine Schnittstelle zu einem Computer und/oder einem Netzwerk aufweisen.

Die elektronische Schaltung 104 des Dokuments 100 ist so ausgebildet, dass die Wiedergabe der Daten 107 über die Anzeige 102 für eine Zeitdauer erfolgt, die unterhalb der Wahrnehmungsschwelle für eine visuelle Wahrnehmung liegt. Diese Zeitdauer beträgt im Allgemeinen ca. 0,04 s, entsprechend einer Bildwechselfrequenz von 25 Hz.

Beispielsweise steuert die elektronische Schaltung 104 die Anzeige 102 zur permanenten Wiedergabe der Daten 106 an. Auf der Anzeige 102 ist dann also ein Standbild zu sehen. Ferner steuert die elektronische Schaltung 104 die Anzeige 102 zur Wiedergabe der Daten 107 an.

Die Wiedergabe der Daten 107 kann die Wiedergabe der Daten 106 überlagern. Alternativ erfolgt die Wiedergabe der Daten 106 und der Daten 107 in einer zeitlichen Reihenfolge, das heißt, die Wiedergabe der Daten 106 wird zur Wiedergabe der Daten 107 für eine kurze Zeitdauer unterbrochen. Da diese Zeitdauer unterhalb der Wahrnehmungsschwelle für eine visuelle Wahrnehmung mit bloßem Auge liegt, ist die kurzfristig erfolgende Unterbrechung der Wiedergabe der Daten 106 durch die Wiedergabe der Daten 107 durch einen Benutzer nicht erkennbar.

Beispielsweise wird die Wiedergabe der Daten 106 dadurch unterbrochen, dass in einem Refresh-Zyklus der Anzeige 102 die Wiedergabe der Daten 107 anstelle der Daten 106 erfolgt. Diese Unterbrechung der Wiedergabe der Daten 106 durch die Wiedergabe der Daten 107 kann periodisch in gleichen oder variierenden Zeitabständen erfolgen. Vorzugsweise beträgt der Zeitabstand zwischen zwei aufeinander folgenden Wiederholungen der Wiedergabe der zweiten Daten ein Vielfaches der Bildwiederholperiode, das heißt, zum Beispiel mindestens 0,1 s, vorzugsweise zwischen 0,5 s und 10 s.

Das Lesegerät 108 kann mit seinem Sensor 110 die Wiedergabe der Anzeige 102 erfassen. Dies kann permanent erfolgen, so dass das Lesegerät 108 also ständig die von der Anzeigevorrichtung 102 erzeugte Wiedergabe optisch sensiert. Hierzu ist der Sensor 110 beispielsweise als Hochgeschwindigkeitskamera ausgebildet. Sobald die Wiedergabe der Daten 107 auf der Anzeige 102 detektiert wird, werden die in der Wiedergabe der Daten beinhalteten Informationen erfasst und beispielsweise über die Nutzerschnittstelle 116 ausgegeben.

Beispielsweise handelt es sich bei der erfassten Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die von der Wiedergabe der Daten 107 über die Anzeige 102 optisch von dem Sensor 110 erfasste Personalisierungsinformation, die über die Schnittstelle 116 des Lesegeräts 108 ausgegeben wird, mit der auf dem Aufdruck 114 gezeigten Personalisierungsinformation übereinstimmen muss.

Bei den Daten 107 kann es sich auch um ein Wappen, Siegel oder ein anderes Sicherheitsmerkmal handeln. Die Wiedergabe dieses Sicherheitsmerkmals wird von dem Sensor 110 des Lesegeräts 108 erfasst und durch die elektronische Schaltung 112 mit der dort gespeicherten Referenzinformation verglichen. Wenn das optisch erfasste Sicherheitsmerkmal mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Die elektronische Schaltung 104 kann auch so ausgebildet sein, dass sie unmittelbar vor der Wiedergabe der Daten 107 auf der Anzeige 102 ein Trigger-Signal abgibt, welches beispielsweise drahtlos oder optisch zu der elektronischen Schaltung 112 übertragen wird. Erst aufgrund dieses Trigger-Signals startet die elektronische Schaltung 112 die optische Erfassung der Wiedergabe der Anzeige 102 mit Hilfe des Sensors 110. Der Sensor 110 kann bei dieser Ausführungsform beispielsweise als time-gated Sensor abgebildet sein, insbesondere als time-gated CCD-Kamera.

In einer weiteren Ausführungsform wird das Trigger-Signal vom Lesegerät abgegeben. Auf diese Weise wird die zweite Information nur auf diesen Trigger hin angezeigt. Beispielsweise ist das Steuerungsprogramm des Lesegeräts 108 so ausgebildet, dass es periodisch in gleichen oder variierenden Zeitabständen ein solches Trigger-Signal auslöst, welches von der Schnittstelle 132 an die Schnittstelle 124 des Dokuments 100 gesendet wird. Aufgrund dieses Trigger-Signals wird dann die Wiedergabe der Daten 107 auf der Anzeige 102 ausgelöst. Ferner wird das Trigger-Signal intern von dem Lesegerät 108 zum Start der optischen Erfassung dieser Wiedergabe durch den Sensor 110 verwendet.
Bei den Daten 106 und/oder 107, die von der elektronischen Schaltung 104 über die Anzeige 102 ausgegeben werden, kann es sich auch um ein Kraftfahrzeugkennzeichen, einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebenden Daten 106 und/oder 107 an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Daten 106 und/oder 107 zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form von Daten 107 von dem Kraftfahrzeug-Elektronikgerät an die elektronische Schaltung 104 übertragen, sodass der Abgaswert über die Anzeige 102 ausgegeben wird. Entsprechend kann für weitere FahrZeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 zur Aktualisierung der Daten 107 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt.

Die Figur 2 zeigt ein entsprechendes Flussdiagramm. In dem Schritt 200 erfolgt die Wiedergabe von Bilddaten (vgl. Daten 106 in der Ausführungsform der Figur 1) auf der Anzeige des Dokuments. Hierbei kann es sich zum Beispiel um das Gesichtsbild eines Trägers des Dokuments handeln. In dem Schritt 202 erfolgt für einen kurzen Zeitraum Δt die Wiedergabe einer Information (vgl. Daten 107 der Figur 1). Die Wiedergabe der Information kann die Wiedergabe der Bilddaten überlagern. Alternativ wird die Wiedergabe der Bilddaten zur Wiedergabe der Information unterbrochen. In beiden Fällen wird die Information nur für den kurzen Zeitraum Δt wiedergegeben, wobei der Zeitraum Δt kleiner als die Wahrnehmungsschwelle T für eine visuelle Wahrnehmung ist. Diese Wahrnehmungsschwelle T beträgt im Allgemeinen ca. 0,04s.

Beispielsweise erfolgt die Wiedergabe der Information während eines Refresh-Cycles der Anzeige des Dokuments. Nach Ablauf des Zeitraums Δt wird zu dem Schritt 200 zurückgegangen, das heißt, es werden wieder nur die Bilddaten auf der Anzeige wiedergegeben. Nach einem gewissen Zeitraum, der ein Mehrfaches der Zeit Δt beträgt, erfolgt wiederum ein Übergang von dem Schritt 200 in den Schritt 202, um die Information erneut für einem kurzen Zeitraum Δt wiederzugeben.

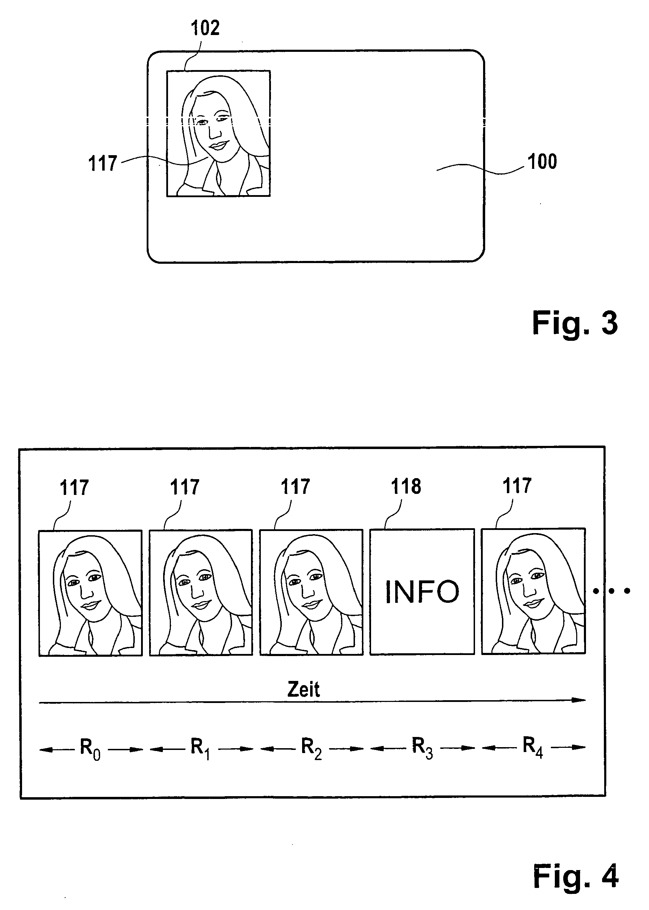

Die Figur 3 zeigt eine Draufsicht auf eine Ausführungsform eines erfindungsgemäßen Dokuments. Auf der Anzeige 102 des Dokuments wird ein Standbild 117 oder eine Bildsequenz wiedergegeben, wobei es sich hier um ein digitales Passfoto handelt. Die Wiedergabe des Standbilds 117 erfolgt solange, wie das Dokument mit elektrischer Energie versorgt wird. Die Versorgung des Dokuments 100 mit elektrischer Energie kann beispielsweise durch die Einkopplung elektromagnetischer Wellen, insbesondere durch das Lesegerät 108 (vgl. Figur 1) erfolgen.

Die Figur 4 zeigt den zeitlichen Verlauf der von der Anzeige 102 erzeugten Wiedergabe. Die Anzeige 102 ist so ausgebildet, dass in jedem Refresh-Zyklus R ein Vollbild angezeigt wird. Dies ist in den Refresh-Zyklen R₀, R₁, R₂ und R₄ das Standbild 117. Die Wiedergabe des Standbilds 117 wird durch die Wiedergabe der Information (vgl. Daten 107 der Figur 1) unterbrochen, indem diese in dem Refresh-Zyklus R₃ zwischen den Refresh-Zyklen R₂ und R₄ auf der Anzeige 102 angezeigt wird. Die in den Refresh-Zyklen R₀, R₁, R₂ und R₄ dargestellten Bilder können auch voneinander verschieden sein.

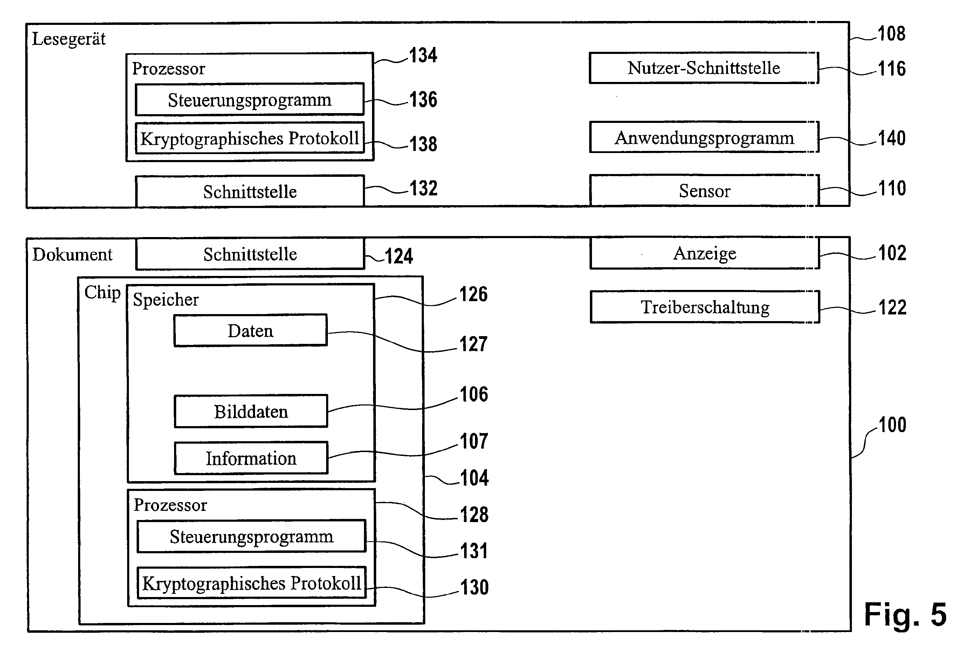

Die Figur 5 zeigt eine weitere Ausführungsform des Dokuments 100 des Lesegeräts 108.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und 107 gespeichert, die zur Wiedergabe durch die Anzeige 102 vorgesehen sind. Die Schaltung 104 hat ferner einen Prozessor 128 zur Ausführung von Programminstruktionen 130, durch welche die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der Bildwiedergabe der Anzeige 102. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet.

Die Schnittstellen 124, 132 können kontaktbehaftet, kontaktlos oder als so genanntes Dual-Mode-Interface ausgebildet sein. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Das Lesegerät 108 hat zumindest einen Prozessor 134 zur Ausführung eines Steuerungsprogramms 136 sowie von Programminstruktionen 138, durch welche die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 und der Daten 107 ansteuert, wobei die Wiedergabe der Daten 107 immer nur für eine Zeitdauer erfolgt, die unterhalb der Wahrnehmungsschwelle liegt, und wobei der zeitliche Abstand zwischen zwei aufeinander folgende Wiedergaben der Daten 107 ein Mehrfaches dieser Wahrnehmungsschwelle beträgt. Beispielsweise erfolgt die Wiedergabe der Daten 106 und 107 so, wie in der Figur 4 gezeigt.

Zum Zugriff auf die Daten 127 des Speichers 126 erfasst das Lesegerät 108 zunächst mittels seines optischen Sensors 110 die Bildwiedergabe der Anzeige 102. Hierzu wird der Sensor 110 entsprechend von dem Steuerungsprogramm 136 angesteuert. Das Steuerungsprogramm 136 extrahiert die in der Wiedergabe der Daten 107 beinhaltete Information. Beispielsweise kann die Information in Form eines digitalen Wasserzeichens vorliegen, als Barcode oder dergleichen. Auf diese Art und Weise erhält das Steuerungsprogramm 136 Kenntnis des kryptographischen Schlüssels.

Die Erfassung der Bildwiedergabe der Anzeige 102 kann entweder permanent erfolgen, wobei der Sensor 110 dann als Hochgeschwindigkeitskamera ausgebildet sein kann. Aufgrund der permanenten Erfassung der Bildwiedergabe wird auch die intermittierend erfolgende Wiedergabe der Daten 107 erfasst. Alternativ generieren die Programminstruktionen 131 unmittelbar vor jeder Wiedergabe der Daten 107 ein Trigger-Signal, welches beispielsweise von der Schnittstelle 124 an die Schnittstelle 132 übertragen wird. Das Steuerungsprogramm 136 startet aufgrund des Trigger-Signals dann die Erfassung der Bildwiedergabe der Anzeige 102, welche dann für den kurzen Zeitraum Δt die Daten 107 wieder gibt. Bei dieser Ausführungsform kann der Sensor 110 als so genanntes time-gated CCD-Kamera-System ausgebildet sein.

Nach der Erfassung des kryptographischen Schlüssels aus der Wiedergabe der Daten 107 startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor aus der Bildwiedergabe der Anzeige 102 gewonnenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

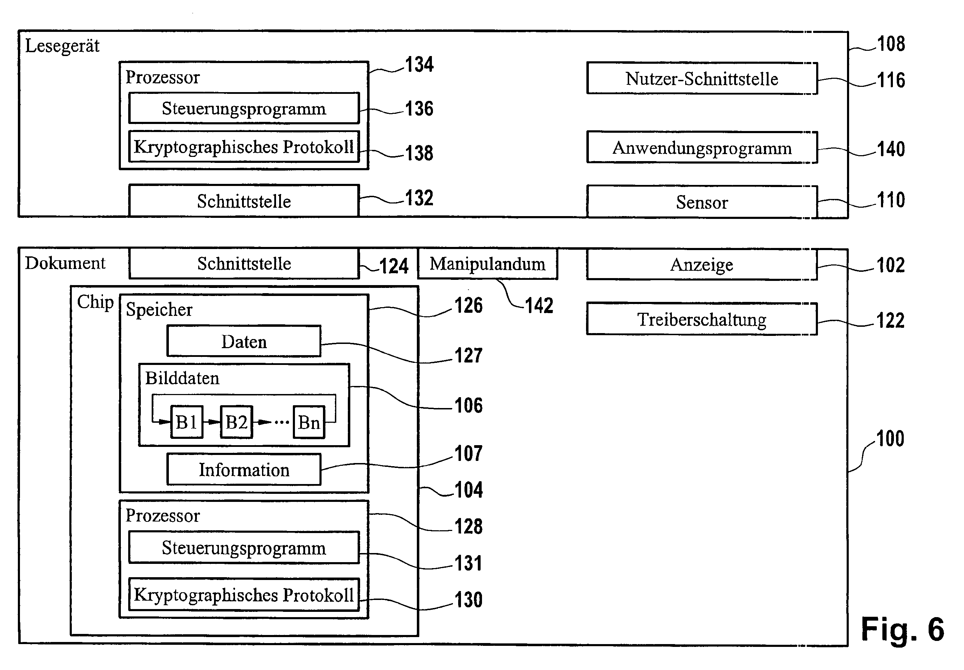

Die Figur 6 zeigt eine weitere Ausführungsform des Dokuments 100. Diese Ausführungsform unterscheidet sich von der Ausführungsform der Figur 5 insbesondere dadurch, dass die Daten 106 eine Bildsequenz bestehend aus einer Anzahl von n Bildern B1, B2, ..., Bn beinhalten.

Ferner hat das Dokument 100 ein Manipulandum 142. Bei dem Manipulandum 142 kann es sich um Betätigungselement, wie zum Beispiel ein oder mehrere Druckknöpfe oder Drehknöpfe handeln. Das Manipulandum 142 dient zur Navigation entlang der Bildsequenz, die durch die Bilddaten B1, B2, ..., Bn gegeben ist. Beispielsweise beinhaltet das Manipulandum 142 eine "vorwärts" und eine "rückwärts" Funktion, so dass ein von dem gegenwärtig auf der Anzeige 102 wiedergegebene Bild Bi ausgehend nachfolgendes Bild Bi+1 oder vorhergehendes Bild Bi-1 der Bildsequenz für die Wiedergabe auf der Anzeige 102 durch einen Benutzer ausgewählt werden kann.

Das Steuerungsprogramm 131 kann so ausgebildet sein, dass bei jedem Übergang von einem Bild der Bildsequenz zu einem anderen Bild die Information 107 für den Zeitraum Δt auf der Anzeige 102 wiedergegeben wird. Wird also beispielsweise das Bild Bi auf der Anzeige 102 wiedergegeben und betätigt der Benutzer das Manipulandum 142, um das nachfolgende Bild Bi+1 der Bildsequenz für die Wiedergabe auf der Anzeige 102 auszuwählen, so steuert das Steuerungsprogramm 131 die Treiberschaltung 122 so an, dass zunächst für den Zeitraum Δt die Daten 107 auf der Anzeige 102 wiedergegeben werden, bevor das Bild Bi+1 auf der Anzeige 102 wiedergegeben wird.

Das Steuerungsprogramm 131 kann ferner so ausgebildet sein, dass bei jeder Betätigung des Manipulandums 142 das Trigger-Signal für das Lesegerät 108 generiert und über die Schnittstelle 124 an das Lesegerät 108 abgesendet wird, so dass die anlässlich des Wechsels der Anzeige von dem Bild Bi zu dem Bild Bi+1 erfolgende Wiedergabe der Information 107 durch den Sensor 110 des Lesegeräts 108 erfasst werden kann.

### Bezugszeichenliste

- 100: Dokument
- 102: Anzeige
- 104: Schaltung
- 106: Daten
- 107: Daten
- 108: Lesegerät
- 110: Sensor
- 112: Schaltung
- 114: Aufdruck
- 116: Nutzerschnittstelle
- 117: Standbild
- 118: Wiedergabe
- 120: Anzeigeelement
- 122: Treiberschaltung
- 124: Schnittstelle
- 126: Speicher
- 127: Daten
- 128: Prozessor
- 130: Programminstruktionen
- 131: Programminstruktionen
- 132: Schnittstelle
- 134: Prozessor
- 136: Steuerungsprogramm
- 138: Programminstruktionen
- 140: Anwendungsprogramm
- 142: Manipulandum

## Patentansprüche

1. Dokument mit einer integrierten Anzeigevorrichtung (102), einem elektronischen Speicher (126) zur Speicherung erster (106) und zweiter (107) Daten, und mit Steuerungsmitteln (122, 128, 131) zur Ansteuerung der Anzeigevorrichtung für eine Wiedergabe der ersten und zweiten Daten, **dadurch gekennzeichnet**, daβ die Steuerungsmittel so ausgebildet sind, dass jede Wiedergabe der zweiten Daten für eine Zeitdauer erfolgt, die unterhalb der Wahrnehmungsschwelle für eine visuelle Wahrnehmung der Wiedergabe der zweiten Daten liegt, derart dass die zweiten Daten nicht mit dem bloßen Auge wahrnehmbar sind, und im Fall einer wiederholten Wiedergabe der zweiten Daten zwischen je zwei Wiederholungen ein Zeitraum liegt, der zumindest ein Mehrfaches der Wahrnehmungsschwelle beträgt.

2. Dokument nach Anspruch 1, mit Mitteln (124, 131) zur Abgabe eines Trigger-Signals für ein Lesegerät (108), um eine Erfassung der Wiedergabe der zweiten Daten durch das Lesegerät auszulösen.

3. Dokument nach einem der vorhergehenden Ansprüche, mit Mitteln (124, 131) zum Empfang eines Trigger-Signals von einem Lesegerät (108), um eine Wiedergabe der zweiten Daten auszulösen.

4. Dokument nach einem der vorhergehenden Ansprüche, wobei die ersten Daten eine Bildsequenz beinhalten, und wobei die zweiten Daten beim Übergang von einem ersten Bild der Bildsequenz zu einem zweiten Bild der Bildsequenz wiedergegeben werden.

5. Dokument nach Anspruch 4, mit einem Manipulandum (142) zur Navigation entlang der Bildsequenz, wobei die Mittel zur Abgabe eines Trigger-Signals so ausgebildet sind, dass durch eine Betätigung des Manipulandums die Abgabe des Trigger-Signals veranlasst wird.

6. Dokument nach einem der vorhergehenden Ansprüche, wobei die zweiten Daten zumindest eine Information beinhalten, die durch die Wiedergabe der zweiten Daten ausgegeben wird.

7. Dokument nach Anspruch 6, wobei es sich bei der Information um eine Personalisierungsinformation, ein Sicherheitsmerkmal und/oder einen kryptographischen Schlüssel handelt.

8. Dokument nach Anspruch 6 oder 7, wobei die Wiedergabe der Information in Klartext oder in codierter Form erfolgt und /oder wobei die Wiedergabe der In-formation in Form eines digitalen Wasserzeichens oder in Form eines Barcodes erfolgt.

9. Dokument nach einem der vorhergehenden Ansprüche, mit einem geschützten Speicherbereich zur Speicherung dritter Daten (127), und mit Mitteln (130) zur Ausführung eines kryptographischen Protokolls und mit einer Schnittstelle (124) zu einem Lesegerät (108), wobei ein Zugriff des Lesegeräts auf die dritten Daten über die Schnittstelle die Ausführung des kryptographischen Protokolls mit Hilfe eines in den zweiten Daten beinhalteten oder aus diesen ableitbaren kryptographischen Schlüssels voraussetzt.

10. System aus Lesegerät und Dokument nach einem der vorhergehenden Ansprüche, wobei das Lesegerät einen optischen Sensor (102) zur Erfassung der Wiedergabe der zweiten Daten aufweist.

11. System nach Anspruch 10, mit Mitteln (138) zur Ausführung eines kryptographischen Protokolls und einer Schnittstelle (132) zur Kommunikation mit dem Dokument, wobei ein Zugriff auf die dritten Daten (127) des Dokuments voraussetzt, dass das kryptographische Protokoll mit Hilfe einer aus der Wiedergabe der zweiten Daten erfassten Information erfolgreich durchgeführt worden ist.

12. System nach Anspruch 10 oder 11, mit Mitteln zum Empfang eines Trigger-Signals von dem Dokument, wobei die Erfassung der Wiedergabe der zweiten Daten durch den Sensor aufgrund des Trigger-Signals ausgelöst wird.

13. System nach Anspruch 12, wobei der optische Sensor als time-gated Sensor ausgebildet ist.

14. Verfahren mit folgenden Schritten:
- Wiedergabe der zweiten daten auf ein dokument nach einem der Ansprüche 1 bis 9
- Erfassung einer Information aus der Wiedergabe der zweiten Daten,
- Vergleich der Information mit einer Referenz-Information.

15. Computerprogrammprodukt mit ausführbaren Instruktionen zur Durchführung eines Verfahrens nach Anspruch 14.

## Claims

1. A document, comprising a built-in display device (102), an electronic memory (126) for storing first data (106) and second data (107), and comprising control means (122, 128, 131) for controlling the display device so as to reproduce the first and second data, **characterised in that** the control means are designed such that each reproduction of the second data lasts for a period of time that is less than the perception threshold for visual perception of the reproduction of the second data, in such a way that the second data are not perceptible to the naked eye, and, in the case of repeated reproduction of the second data, there is a gap between each two repetitions corresponding to a multiple of the perception threshold.

2. The document according to Claim 1, comprising means (124, 131) for delivering a trigger signal for a reading device (108) so as to trigger a detection of the reproduction of the second data by the reading device.

3. The document according to one of the preceding claims, comprising means (124, 131) for receiving a trigger signal from a reading device (108) so as to trigger reproduction of the second data.

4. The document according to one of the preceding claims, wherein the fist data contain an image sequence, and wherein the second data are reproduced during a transition from a first image in the image sequence to a second image in the image sequence.

5. The document according to Claim 4, comprising a manipulandum (142) for navigation along the image sequence, wherein the means for delivering a trigger signal are designed such that the delivery of the trigger signal is prompted by an actuation of the manipulandum.

6. The document according to one of the preceding claims, wherein the second data contain at least one piece of information that is output by the reproduction of the second data.

7. The document according to Claim 6, wherein the information is personalised information, a security feature and/or a cryptographic key.

8. The document according to claim 6 or 7, wherein the information is reproduced in plaintext or in coded form, and/or wherein the information is reproduced in the form of a digital watermark or tin the form of a barcode.

9. The document according to one of the preceding claims, comprising a protected memory area for storing third data (127), and comprising means (130) for executing a cryptographic protocol, and comprising an interface (124) to a reading device (108), wherein access of the reading device to the third data via the interface requires the execution of the cryptographic protocol with the aid of a cryptographic key contained in the second data or derivable therefrom.

10. A system formed of a reading device and document according to one of the preceding claims, wherein the reading device comprises an optical sensor (102) for detecting the reproduction of the second data.

11. The system according to Claim 10, comprising means (138) for executing a cryptographic protocol and an interface (132) for communication with the document, wherein access to the third data (127) of the document requires the cryptographic protocol to have been carried out successfully with the aid of a piece of information detected from the reproduction of the second data.

12. The system according to Claim 10 or 11, comprising means for receiving a trigger signal from the document, wherein the detection of the reproduction of the second data by the sensor is triggered as a result of the trigger signal.

13. The system according to Claim 12, wherein the optical sensor is designed as a time-gated sensor.

14. A method comprising the following steps:
- reproducing the second data on a document according to one of Claims 1 to 9,
- detecting a piece of information from the reproduction of the second data,
- comparing the piece of information with a reference piece of information.

15. A computer program product comprising executable instructions for carrying out a method according to Claim 14.

## Revendications

1. Document avec un dispositif d'affichage intégré (102), une mémoire électronique (126) pour l'enregistrement de premières (106) et deuxièmes données (207), et avec des moyens de commande (122, 128, 131) permettant de commander le dispositif d'affichage pour la lecture des premières et deuxièmes données, **caractérisé en ce que** les moyens de commande sont conçus de telle façon que chaque lecture des deuxièmes données est effectuée sur une certaine durée inférieure au seuil de perception pour une perception visuelle de la lecture des deuxièmes données, de sorte que les deuxièmes données ne peuvent être perçues à l'oeil nu, et dans le cas d'une lecture répétée des deuxièmes données, un laps de temps s'écoule respectivement entre deux répétitions, lequel est au moins un multiple du seuil de perception.

2. Document selon la revendication 1, avec des moyens (124, 131) pour l'émission d'un signal déclencheur destiné à un dispositif de lecture (108), pour déclencher la saisie d'une lecture des deuxièmes données par le dispositif de lecture.

3. Document selon l'une des revendications précédentes, avec des moyens (124, 131) pour la réception d'un signal déclencheur venant d' un dispositif de lecture (108), visant à déclencher une lecture des deuxièmes données.

4. Document selon l'une des revendications précédentes, dans lequel les premières données contiennent une séquence d'images, et dans lequel les deuxièmes données sont lues pendant le passage d'une première image de la séquence d'images à une deuxième image de la séquence d'images.

5. Document selon la revendication 4, avec un manipulandum (142) pour la navigation le long de la séquence d'images, dans lequel les moyens pour l'émission d'un signal déclencheur sont conçus de manière à ce qu'un actionnement du manipulandum entraîne l'émission du signal déclencheur.

6. Document selon l'une des revendications précédentes, dans lequel les deuxièmes données contiennent au moins une information distribuée par la lecture des deuxièmes données.

7. Document selon la revendication 6, dans lequel l'information est une information de personnalisation, une caractéristique de sécurité et/ou une clé cryptographique.

8. Document selon la revendication 6 ou 7, dans lequel la lecture de l'information est effectuée sous forme de texte clair ou sous forme codée, et/ou dans lequel la lecture de l'information est effectuée sous la forme d'un filigrane numérique ou sous la forme d'un code-barres.

9. Document selon l'une des revendications précédentes, avec une zone de mémoire protégée pour l'enregistrement de troisièmes données (127), et avec des moyens (130) destinés à exécuter un protocole cryptographique, et avec une interface (124) vers un dispositif de lecture (108), dans lequel un accès du dispositif de lecture aux troisièmes données par le biais de l'interface suppose l'exécution du protocole cryptographique à l'aide d'une clé cryptographique contenue dans les deuxièmes données ou déductible de celles-ci.

10. Système constitué d'un dispositif de lecture et d'un document selon l'une des revendications précédentes, dans lequel le dispositif de lecture comporte un capteur optique (102) pour la détection de la lecture des deuxièmes données.

11. Système selon la revendication 10, avec des moyens (138) permettant d'exécuter un protocole cryptographique, et une interface (132) permettant de communiquer avec le document, dans lequel un accès aux troisièmes données (127) du document suppose la bonne exécution du protocole cryptographique, à l'aide d'une information saisie au cours de la lecture des deuxièmes données.

12. Système selon la revendication 10 ou 11, avec des moyens pour la réception d'un signal déclencheur venant du document, dans lequel saisie de la lecture des deuxièmes données est déclenchée par le capteur, du fait du signal déclencheur.

13. Système selon la revendication 12, dans lequel le capteur optique est conçu comme un capteur à sélection temporelle.

14. Procédé comprenant les étapes suivantes :
- lecture des deuxièmes données sur un document selon l'une des revendications 1 à 9,
- saisie d'une information à partir de la lecture des deuxièmes données,
- comparaison de l'information avec une information de référence.

15. Produit de programme informatique avec des instruction exécutables pour la mise en oeuvre d'un procédé selon la revendication 14.
